# EUROPEAN PATENT SPECIFICATION

(11) **EP 2 808 129 B1**
(45) Date of publication and mention of the grant of the patent: **15.06.2016**
(21) Application number: 14176298.9
(22) Date of filing: 25.08.2005
(51) Int. Cl.: B25D 17/24, B25D 16/00

(54) **Power tool**
Kraftgetriebenes Handwerkzeug
Outil électrique

(30) Priority: 27.08.2004 JP 2004249011
(43) Date of publication of application: 03.12.2014
(62) Divisional of application: 08017019.4
(73) Proprietor: Makita Corporation, Anjo, Aichi 446-8502 (JP)
(72) Inventor: Aoki, Yonosuke, Anjo,, Aichi 446-8502 (JP)
(74) Representative: Kramer Barske Schmidtchen Patentanwälte PartG mbB

(56) References cited:
- EP-A- 0 066 779
- DE-C- 815 179
- FR-A- 2 237 734
- JP-A- 52 109 673
- JP-A- 57 066 879
- JP-A- 2003 011 073
- JP-A- 2004 216 524
- US-A- 2 875 731

## Description

### FIELD OF INVENTION

The present invention relates to a hammer drill, which linearly drives a tool bit.

### BACKGROUND OF THE INVENTION

Document JP 2004 216524 A is considered to be the closest prior art to the subject-matter of claim 1, and discloses:
A hammer drill, comprising a motor, an internal mechanism driven by the motor, a housing that houses the motor and the internal mechanism, a hammer bit detachably coupled to one end of the housing in the longitudinal direction of the hammer bit via a tool holder and driven by the internal mechanism in the longitudinal direction of the hammer bit to perform a predetermined operation, the internal mechanism comprising a motion converting mechanism that converts the rotating output of the motor to linear motion and drives the hammer bit in its longitudinal direction, a handgrip connected to the other end of the housing in the longitudinal direction of the hammer bit, and a dynamic vibration reducer including a weight and an elastic element, the elastic element being disposed between the weight and the housing and adapted to apply a biasing force to the weight, wherein the weight reciprocates in the longitudinal direction of the hammer bit against the biasing force of the elastic element, whereby the dynamic vibration reducer reduces vibration which is caused in the housing in the longitudinal direction of the hammer bit in the working operation, wherein the one end of the housing is the front side and the other end of the housing is the rear side of the housing, the housing of the hammer drill includes a motor housing and a crank housing forming an outer housing, wherein the motor housing is located on a lower part of the handgrip toward the front side of the housing and houses the driving motor and the crank housing is located on an upper part of the handgrip toward the front side of the housing and joined to the motor housing from above such that the side of the driving motor is the lower side of the housing and the opposite side is the upper side of the housing in a vertical direction and a horizontal direction extends from a left side to a right side of the housing and the vertical direction and the horizontal direction are perpendicular to the longitudinal direction, wherein the weight is disposed within a vibration reducer body and can move in the longitudinal direction of the vibration reducer body, the elastic element is formed by biasing springs applying a spring force to the weight when the weight moves in the longitudinal direction.

Japanese non-examined laid-open Patent Publication No. 52-109673 discloses an electric hammer having a vibration reducing device. In the known electric hammer, a vibration proof chamber is integrally formed with a body housing (and a motor housing) in a region on the lower side of the body housing and forward of the motor housing. A dynamic vibration reducer is disposed within the vibration proof chamber.

In the above-mentioned known electric hammer, the vibration proof chamber that houses the dynamic vibration reducer is provided in the housing in order to provide an additional function of reducing vibration in working operation. As a result, however, the electric hammer increases in size.

### SUMMARY OF THE INVENTION

### (Object of the Invention)

It is, accordingly, an object of the present invention to provide an effective technique for reducing vibration in working operation, while avoiding size increase of a power tool.

### (Subject-matter of the Invention)

The above described object is achieved by a hammer drill according to claim 1. The elastic element is disposed between the weight and the housing and adapted to apply a biasing force to the weight. The weight reciprocates in the longitudinal direction of the tool bit against the biasing force of the elastic element. By the reciprocating movement of the weight, the dynamic vibration reducer reduces vibration which is caused in the hosing in the longitudinal direction of the tool bit in the working operation.

The "power tool" is a hammer drill, and the "internal mechanism" comprises a motion converting mechanism that converts the rotating output of the motor to linear motion and drives the tool bit in its longitudinal direction, and a power transmitting mechanism that appropriately reduces the speed of the rotating output of the motor and transmits the rotating output as rotation to the tool bit.

The dynamic vibration reducer is disposed in the power tool by utilizing a space within the housing. Therefore, the dynamic vibration reducer can perform a vibration reducing action in working operation, while avoiding size increase of the power tool. Further, the dynamic vibration reducer can be protected from an outside impact, for example, in the event of drop of the power tool.

The present invention will be more apparent from the following detailed description and the drawings.

### BRIEF DESCRIPTION OF THE DRAWINGS

FIG. 1 is a side view showing a hammer drill according to an embodiment of the invention, with an outer housing and an inner housing shown in section.
FIG. 2 is a side view of the hammer drill, with the outer housing shown in section.
FIG. 3 is a plan view of the hammer drill, with the outer housing shown in section.
FIG. 4 and 5 are plan views of a hammer drill which is not according to the invention with the outer housing shown in section.
FIG. 6 and 7 are sectional views taken along line A-A, respectively B-B, in FIG. 1 of a hammer drill which is not according to the invention.

### DETAILED DESCRIPTION OF THE INVENTION

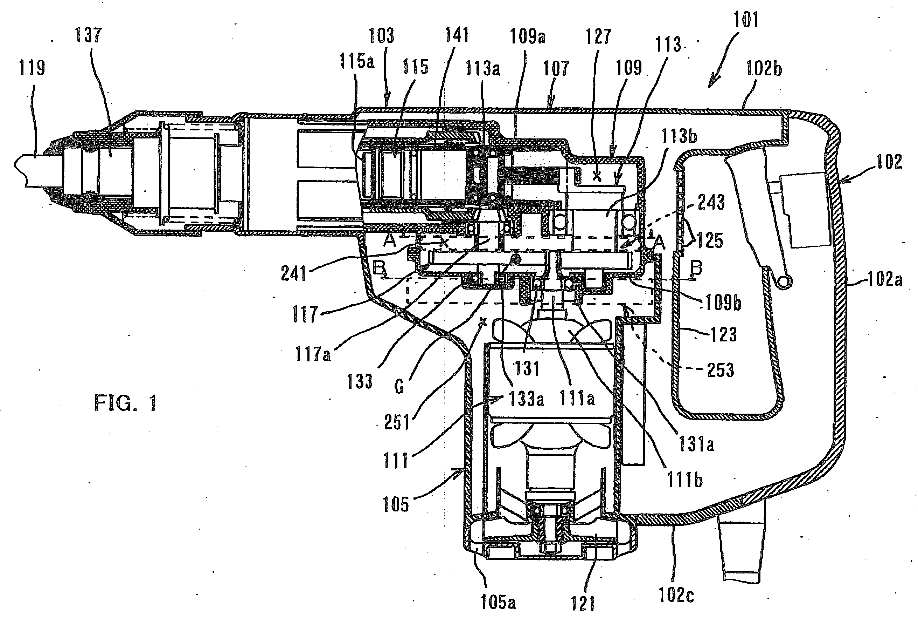

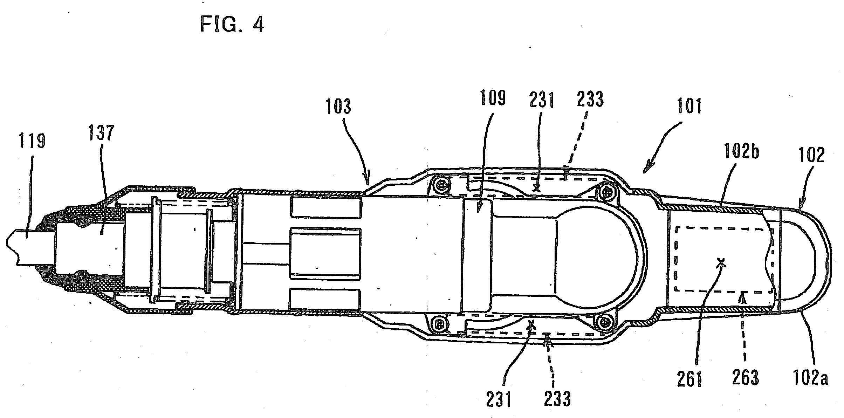

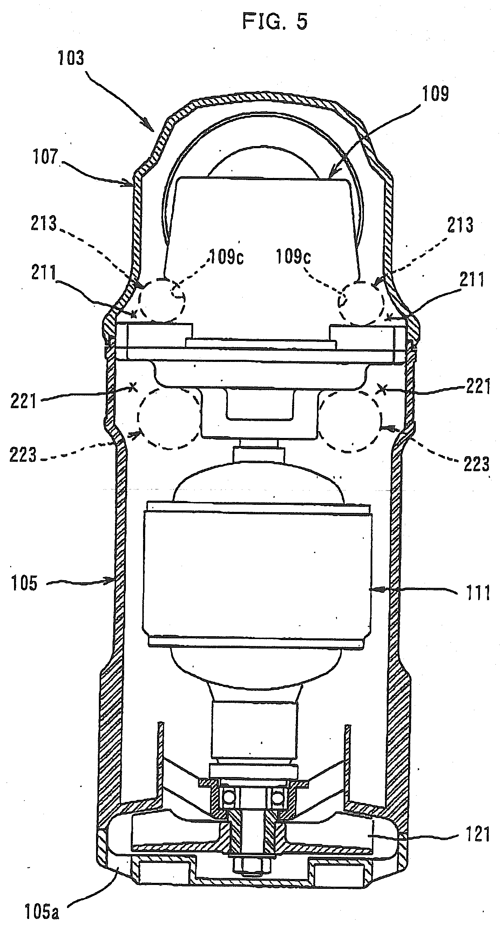

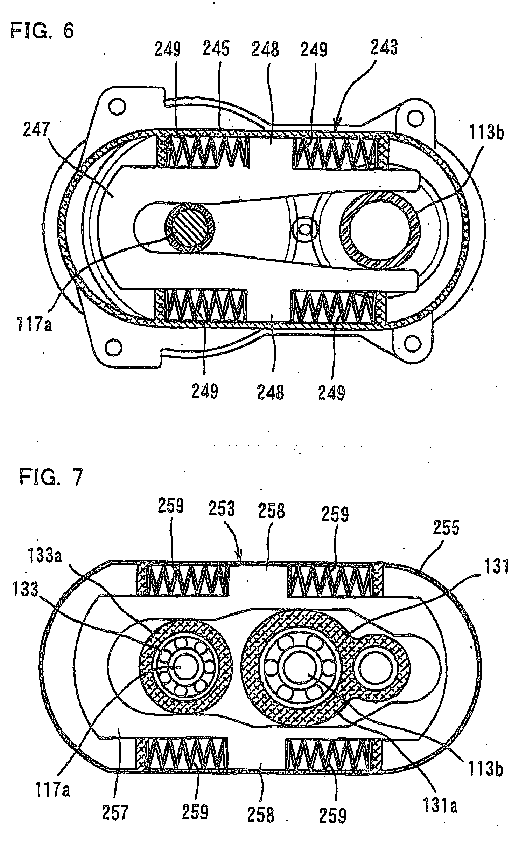

Representative embodiments will now be described with reference to FIGS. 1 to 7, of which only the preferred embodiment described with reference to FIGS. 1, 2, 3 is covered by the claims. In each embodiment, an electric hammer drill will be explained as a representative example. Each of the embodiments features a dynamic vibration reducer disposed in a space within a housing or a handgrip. Before a detailed explanation of placement of the dynamic vibration reducer, the configuration of the hammer drill will be briefly described with reference to FIG. 1. The hammer drill 101 mainly includes a body 103, a hammer bit 119 detachably coupled to the tip end region (on the left side as viewed in FIG. 1) of the body 103 via a tool holder 137, and a handgrip 102 connected to a region of the body 103 on the opposite side of the hammer bit 119. The body 103, the hammer bit 119 and the handgrip 102 are features that correspond to the "housing", the "tool bit" and the "handgrip", respectively, according to the present invention.

The body 103 of the hammer drill 101 mainly includes a motor housing 105, a crank housing 107, and an inner housing 109 that is housed within the motor housing 105 and the crank housing 107. The motor housing 10S and the crank housing 107 are features that correspond to the "outer housing" according to this invention.

The motor housing 105 is located on the lower part of the handgrip 102 toward the front and houses a driving motor 111. The driving motor 111 is a feature that corresponds to the "motor" according to this invention.

In the present embodiments, for the sake of convenience of explanation, in the state of use in which the user holds the handgrip 102, the side of the hammer bit 119 is taken as the front side and the side of the handgrip 102 as the rear side. Further, the side of the driving motor 111 is taken as the lower side and the opposite side as the upper side; the vertical direction and the horizontal direction which are perpendicular to the longitudinal direction are taken as the vertical direction and the lateral direction, respectively.

The crank housing 107 is located on the upper part of the handgrip 102 toward the front and butt-joined to the motor housing 105 from above. The crank housing 107 houses the inner housing 109 together with the motor housing 105. The inner housing 109 houses a cylinder 141, a motion converting mechanism 113, and a gear-type power transmitting mechanism 114. The cylinder 141 houses a striking element 115 that is driven to apply a striking force to the hammer bit 119 in its longitudinal direction. The motion converting mechanism 113 comprises a crank mechanism and converts the rotating output of the driving motor 111 to linear motion and then drives the striking element 115 via an air spring. The power transmitting mechanism 117 transmits the rotating output of the driving motor 111 as rotation to the hammer bit 119 via a tool holder 137. Further, the inner housing 109 includes an upper housing 109a and a lower housing 109b. The upper housing 109a houses the entire cylinder 141 and most of the motion converting mechanism 113 and power transmitting mechanism 117, while the lower housing 109b houses the rest of the motion converting mechanism 113 and power transmitting mechanism 117. The motion converting mechanism 113, the striking element 115 and the power transmitting mechanism 117 are features that correspond to the "internal mechanism" according to this invention.

The motion converting mechanism 113 appropriately converts the rotating output of the driving motor 111 to linear motion and then transmits it to the striking element 115. As a result, an impact force is generated in the longitudinal direction of the hammer bit 119 via the striking element 115. The striking element 115 includes a striker 115a and an intermediate element in the form of an impact bolt (not shown). The striker 115a is driven by the sliding movement of a piston 113a of the motion converting mechanism 113 via the action of air spring within the cylinder 141. Further, the power transmitting mechanism 117 appropriately reduces the speed of the rotating output of the driving motor 111 and transmits the rotating output as rotation to the hammer bit 119. Thus, the hammer bit 119 is caused to rotate in its circumferential direction. The hammer drill 101 can be switched by appropriate operation of the user between a hammer mode in which a working operation is performed on a workpiece by applying only a striking force to the hammer bit 119 in the longitudinal direction, and a hammer drill mode in which a working operation is performed on a workpiece by applying an longitudinal striking force and a circumferential rotating force to the hammer bit 119.

The hammering operation in which a striking force is applied to the hammer bit 119 in the longitudinal direction by the motion converting mechanism 113 and the striking element 115, and the hammer-drill operation in which a rotating force is applied to the hammer bit 119 in the circumferential direction by the power transmitting mechanism 117 in addition to the striking force in the longitudinal direction are known in the art. Also, the mode change between the hammer mode and the hammer drill mode is known in the art. These known techniques are not directly related to this invention and therefore will not be described in further detail.

The hammer bit 119 moves in the longitudinal direction on the axis of the cylinder 141. Further, the driving motor 111 is disposed such that the axis of an output shaft 111a is perpendicular to the axis of the cylinder 141, The inner housing 109 is disposed above the driving motor 111.

The handgrip 102 includes a grip 102a to be held by the user and an upper and a lower connecting portions 102b, 102c that connect the grip 102a to the rear end of the body 103. The grip 102a vertically extends and is opposed to the rear end of the body 103 with a predetermined spacing. In this state, the grip 102a is detachably connected to the rear end of the body 103 via the upper and lower connecting portions 102b, 102c.

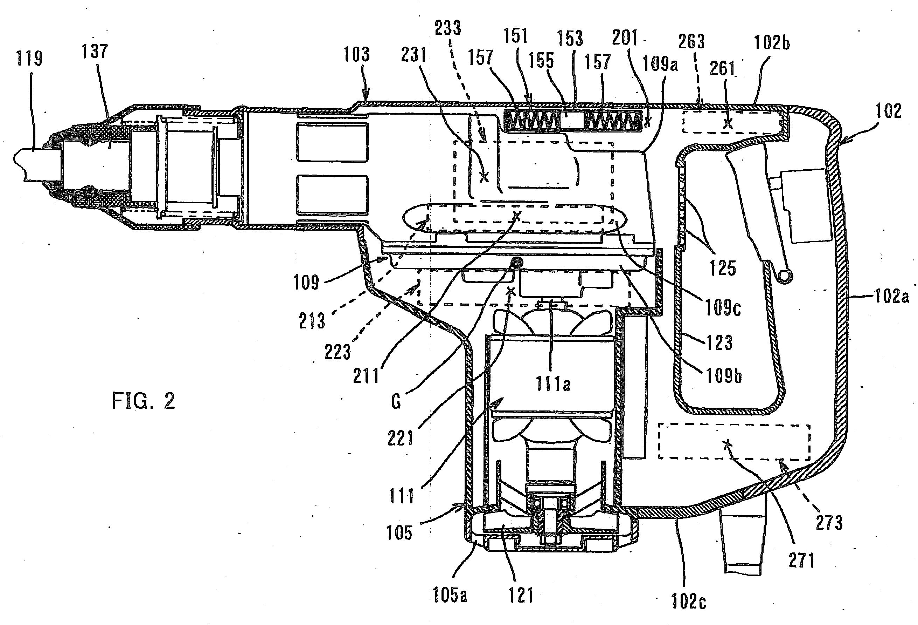

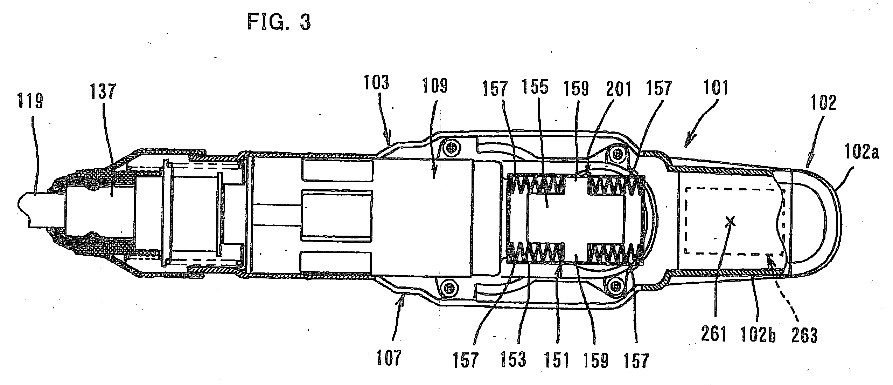

A dynamic vibration reducer 151 is provided in the hammer drill 101 in order to reduce vibration which is caused in the hammer drill 101, particularly in the longitudinal direction of the hammer bit 119, during hammering or hammer-drill operation. The dynamic vibration reducer 151 is shown as an example in FIGS. 2 and 3 in sectional view. The dynamic vibration reducer 151 mainly includes a box-like (or cylindrical) vibration reducer body 153, a weight 155 and biasing springs 157 disposed on the front and rear sides of the weight 155. The weight 155 is disposed within the vibration reducer body 153 and can move in the longitudinal direction of the vibration reducer body 153. The biasing spring 157 is a feature that corresponds to the "elastic element" according to the present invention. The biasing spring 157 applies a spring force to the weight 155 when the weight 155 moves in the longitudinal direction of the vibration reducer body 153.

Placement of the dynamic vibration reducer 151 will now be explained.

### (Preferred Embodiment)

In the preferred embodiment, as shown in FIGS. 2 and 3, the dynamic vibration reducer 151 is disposed by utilizing a space in the upper region inside the body 103, or more specifically, a space 201 existing between the inner wall surface of the upper region of the crank housing 107 and the outer wall surface of the upper region of an upper housing 109a of the inner housing 109. The dynamic vibration reducer 151 is disposed in the space 201 such that the direction of movement of the weight 155 or the vibration reducing direction coincides with the longitudinal direction of the hammer bit 119. The space 201 is dimensioned to be larger in the horizontal directions (the longitudinal and lateral directions) than in the vertical direction (the direction of the height). Therefore, in this embodiment, the dynamic vibration reducer 151 has a shape conforming to the space 201. Specifically, as shown in sectional view, the vibration reducer body 153 has a box-like shape short in the vertical direction and long in the longitudinal direction. Further, projections 159 are formed on the right and left sides of the weight 155 in the middle in the longitudinal direction. The biasing springs 157 are disposed between the projections 159 and the front end and the rear end of the vibration reducer body 153. Thus, the amount of travel of the weight 155 can be maximized while the longitudinal length of the vibration reducer body 153 can be minimized. Further, the movement of the weight 155 can be stabilized.

Thus, in the preferred embodiment, the dynamic vibration reducer 151 is disposed by utilizing the space 201 existing within the body 103. As a result, vibration caused in working operation of the hammer drill 101 can be reduced by the vibration reducing action of the dynamic vibration reducer 151, while size increase of the body 103 can be avoided. Further, by placement of the dynamic vibration reducer 151 within the body 103, the dynamic vibration reducer 151 can be protected from an outside impact in the event of drop of the hammer drill 101.

As shown in FIG. 2, generally, a center of gravity G of the hammer drill 101 is located below the axis of the cylinder 141 and slightly forward of the axis of the driving motor 111. Therefore, when, like this embodiment, the dynamic vibration reducer 151 is disposed within the space 201 existing between the inner wall surface of the upper region of the crank housing 107 and the outer wall surface of the upper region of the upper housing 109a of the inner housing 109, the dynamic vibration reducer 151 is disposed on the side of the axis of the cylinder 141 which is opposite to the center of gravity G of the hammer drill 101. Thus, the center of gravity G of the hammer drill 101 is located closer to the axis of the cylinder 141, which is effective in lessening or preventing vibration in the vertical direction. Further, the dynamic vibration reducer 151 disposed in the space 201 is located relatively near to the axis of the cylinder 141, so that it can perform an effective vibration reducing action against vibration in working operation using the hammer drill 101.

### Description of Numerals

101 hammer drill (power tool)
102 handgrip
102a grip
102b, 102c upper and lower connecting portions
103 body (housing)
105 motor housing (outer housing)
105a outlet
107 crank housing
109 inner housing
109a upper housing
109b lower housing
109c side recess (recess)
111 driving motor (motor)
111a output shaft
111b rotor
113 motion converting mechanism (internal mechanism)
113a piston
113b crank shaft
115 striking mechanism
115a striker
117 power transmitting mechanism
117a gear shaft
119 hammer bit (tool bit)
121 cooling fan
123 cover
125 inlet
127 crank chamber
131, 133 gear
131a, 133a
137 tool holder
141 cylinder
151 front bearing
153 rear bearing
155 weight
157 biasing spring (elastic element)
159 projection
201, 211, 221, 231 space
213, 223, 233 dynamic vibration reducer
241 space
243 dynamic vibration reducer
245 vibration reducer body
247 weight
248 projection
249 biasing spring
251 space
253 dynamic vibration reducer
255 vibration reducer body
257 weight
258 projection
259 biasing spring
261,271 space
263, 273 dynamic vibration reducer

## Claims

1. A hammer drill, comprising
a motor (111),
an internal mechanism (113, 117) driven by the motor (111),
a housing (103) that houses the motor (111) and the internal mechanism (113, 117),
a hammer bit (119) detachably coupled to one end of the housing (103) in the longitudinal direction of the hammer bit (119) via a tool holder (137) and driven by the internal mechanism (113, 117) in the longitudinal direction of the hammer bit (119) to perform a predetermined operation, the internal mechanism comprising a motion converting mechanism (113) that converts the rotating output of the motor (111) to linear motion and drives the hammer bit (119) in its longitudinal direction and a power transmitting mechanism (117) that appropriately reduces the speed of the rotating output of the motor and transmits the rotating output as rotation to the hammer bit (119),
a handgrip (102) connected to the other end of the housing (103) in the longitudinal direction of the hammer bit (119), and
a dynamic vibration reducer (151) including a weight (155) and an elastic element (157), the elastic element (157) being disposed between the weight (155) and the housing (103) and adapted to apply a biasing force to the weight (155), wherein the weight (155) reciprocates in the longitudinal direction of the hammer bit (119) against the biasing force of the elastic element (157), whereby the dynamic vibration reducer (151) reduces vibration which is caused in the housing (103) in the longitudinal direction of the hammer bit (119) in the working operation, wherein the dynamic vibration reducer (151) is disposed by utilizing an internal space (201) defined by the housing (103), wherein the one end of the housing (103) is the front side and the other end of the housing (103) is the rear side of the housing (103), the housing (103) of the hammer drill (101) includes a motor housing (105) and a crank housing (107) forming an outer housing, wherein the motor housing (105) is located on a lower part of the handgrip (102) toward the front side of the housing (103) and houses the driving motor (111) and the crank housing (107) is located on an upper part of the handgrip (102) toward the front side of the housing (103) and joined to the motor housing (105) from above such that the side of the driving motor (111) is the lower side of the housing (103) and the opposite side is the upper side of the housing (103) in a vertical direction and a horizontal direction extends from a left side to a right side of the housing (103) and the vertical direction and the horizontal direction are perpendicular to the longitudinal direction, wherein the weight (155) is disposed within a vibration reducer body (153) and can move in the longitudinal direction of the vibration reducer body (153), the elastic element is formed by biasing springs (157) applying a spring force to the weight (155) when the weight (155) moves in the longitudinal direction, the weight (155) comprises projections (159) on the right and left sides of the weight (155) in the middle in the longitudinal direction, the biasing springs (157) are disposed between the projections (159) and the front end and the rear end of the vibration reducer body (153), wherein the dynamic vibration reducer (151) is disposed by utilizing the internal space (201) existing between the inner wall surface of the upper region of the crank housing (107) and the internal mechanism and the internal space (201) is dimensioned to be larger in the horizontal and longitudinal directions than in the vertical direction and the dynamic vibration reducer (151) has a shape conforming to the internal space (201).

## Patentansprüche

1. Bohrhammer, mit
einem Motor (111),
einem internen Mechanismus (113, 117), der durch den Motor (111) angetrieben wird,
einem Gehäuse (103), das den Motor (111) und den internen Mechanismus (113, 117) aufnimmt,
einem Hammerbit (119), das an ein Ende des Gehäuses (103) in der Längsrichtung des Hammerbits (119) mittels einem Werkzeughalter (137) lösbar gekoppelt ist und durch den internen Mechanismus (113, 117) in der Längsrichtung des Hammerbits (119) zum Ausführen eines vorbestimmten Arbeitsvorganges angetrieben wird, bei dem der interne Mechanismus einen Bewegungsumwandlungsmechanismus (113), der die Drehausgabe des Motors (111) in eine lineare Bewegung umwandelt und das Hammerbit (119) in dessen Längsrichtung antreibt, und
einen Kraftübertragungsmechanismus (117) aufweist, der die Drehzahl der Drehausgabe des Motors geeignet reduziert und die Drehausgabe als Drehung an das Hammerbit (119) überträgt, einem Handgriff (102), der mit dem anderen Ende des Gehäuses (103) in der Längsrichtung des Hammerbits (119) verbunden ist, und
einem dynamischen Vibrationsdämpfer (151), der ein Gewicht (155) und ein elastisches Element (157) enthält, bei dem das elastische Element (157) zwischen dem Gewicht (155) und dem Gehäuse (103) angeordnet ist und dazu angepasst ist, eine Vorspannkraft auf das Gewicht (155) aufzubringen, bei dem sich das Gewicht (155) in der Längsrichtung des Hammerbits (119) entgegen der Vorspannkraft des elastischen Elementes (157) hin- und herbewegt, wodurch der dynamische Vibrationsdämpfer (151) Vibrationen reduziert, die in dem Gehäuse (103) in der Längsrichtung des Hammerbits (119) in dem Arbeitsvorgang verursacht wird, bei dem der dynamische Vibrationsdämpfer (151) unter Verwendung eines internen Raumes (201) angeordnet ist, der durch das Gehäuse (103) definiert ist, bei dem ein Ende des Gehäuses (103) die vordere Seite ist und das andere Ende des Gehäuses (103) die hintere Seite des Gehäuses (103) ist, bei dem das Gehäuse (103) des Bohrhammers (101) ein Motorgehäuse (105) und ein Kurbelgehäuse (107) enthält, die ein äußeres Gehäuse ausbilden, bei dem sich das Motorgehäuse (105) an einem unteren Teil des Handgriffes (102) in Richtung zu der vorderen Seite des Gehäuses (103) befindet und den Antriebsmotor (111) aufnimmt und sich das Kurbelgehäuse (107) an einem oberen Teil des Handgriffes (102) in Richtung zu der vorderen Seite des Gehäuses (103) befindet und mit dem Motorgehäuse (105) von oben her verbunden ist, so dass in einer vertikalen Richtung die Seite des Antriebsmotors (111) die untere Seite des Gehäuses (103) und die gegenüberliegende Seite die obere Seite des Gehäuses (103) ist, und eine horizontale Richtung erstreckt sich von einer linken Seite zu einer rechten Seite des Gehäuses (103) und die vertikale Richtung und die horizontale Richtung sind senkrecht zu der Längsrichtung, bei dem das Gewicht (155) innerhalb eines Vibrationsdämpferkörpers (153) angeordnet ist und sich in der Längsrichtung des Vibrationsdämpferkörpers (153) bewegen kann, bei dem das elastische Element durch Vorspannfedern (157) ausgebildet ist, die eine Federkraft an dem Gewicht (155) aufbringen, wenn sich das Gewicht (155) in der Längsrichtung bewegt, bei dem das Gewicht (155) mittig in der Längsrichtung Vorsprünge (159) an der rechten und der linken Seite des Gewichtes (155) aufweist, bei dem die Vorspannfedern (157) zwischen den Vorsprüngen (159) und dem vorderen Ende und dem hinteren Ende des Vibrationsdämpferkörpers (153) angeordnet sind, bei dem der dynamische Vibrationsdämpfer (151) unter Verwendung des internen Raumes (201), der zwischen der inneren Wandoberfläche des oberen Bereichs des Kurbelgehäuses (107) und dem internen Mechanismus vorhanden ist, angeordnet ist, und der interne Raum (201) so dimensioniert ist, dass er in der horizontalen Richtung und der Längsrichtung größer als in der vertikalen Richtung ist und der dynamische Vibrationsdämpfer (151) eine Form aufweist, die konform zu dem inneren Raum (201) ist.

## Revendications

1. Marteau-perforateur, comprenant
un moteur (111),
un mécanisme interne (113, 117) entraîné par le moteur (111),
un carter (103) qui loge le moteur (111) et le mécanisme interne (113, 117),
un trépan (119) de marteau accouplé de manière détachable à une première extrémité du carter (103) dans la direction longitudinale du trépan (119) de marteau par l'intermédiaire d'un porte-outils (137) et entraîné par le mécanisme interne (113, 117) dans la direction longitudinale du trépan (119) de marteau pour effectuer une opération prédéterminée, le mécanisme interne comprenant un mécanisme de conversion de mouvement (113) qui convertit la sortie rotative du moteur (111) en un mouvement linéaire et entraîne le trépan (119) de marteau dans sa direction longitudinale et un mécanisme de transmission de puissance (117) qui réduit de manière appropriée la vitesse de la sortie rotative du moteur et transmet la sortie rotative en tant que rotation au trépan (119) de marteau,
une poignée (102) reliée à l'autre extrémité du carter (103) dans la direction longitudinale du trépan (119) de marteau, et
un réducteur de vibration dynamique (151) incluant un poids (155) et un élément élastique (157), l'élément élastique (157) étant disposé entre le poids (155) et le carter (103) et adapté pour appliquer une force de sollicitation au poids (155), dans lequel le poids (155) effectuant un mouvement de va-et-vient dans la direction longitudinale du trépan (119) de marteau à l'encontre de la force de sollicitation de l'élément élastique (157), moyennant quoi le réducteur de vibration dynamique (151) réduit la vibration qui est causée dans le carter (103) dans la direction longitudinale du trépan (119) de marteau lors de l'opération de travail, dans lequel le réducteur de vibration dynamique (151) est disposé en utilisant un espace interne (201) défini par le carter (103), dans lequel la première extrémité du carter (103) est le côté avant et l'autre extrémité du carter (103) est le côté arrière du carter (103), le carter (103) du marteau-perforateur (101) inclut un carter (105) de moteur et un carter (107) de manivelle formant un carter extérieur, dans lequel le carter (105) de moteur se situe sur une partie inférieure de la poignée (102) vers le côté avant du carter (103) et loge le moteur d'entraînement (111) et le carter (107) de manivelle se situe sur une partie supérieure de la poignée (102) vers le côté avant du carter (103) et est relié au carter (105) de moteur par au-dessus de telle sorte que le côté du moteur d'entraînement (111) est le côté inférieur du carter (103) et le côté opposé est le côté supérieur du carter (103) dans une direction verticale et une direction horizontale s'étend d'un côté gauche à un côté droit du carter (103) et la direction verticale et la direction horizontale sont perpendiculaires à la direction longitudinale, dans lequel le poids (155) est disposé dans un corps de réduction de vibration (153) et peut se déplacer dans la direction longitudinale du corps de réduction de vibration (153), l'élément élastique est formé par des ressorts de sollicitation (157) appliquant une force de rappel au poids (155) quand le poids (155) se déplace dans la direction longitudinale, le poids (155) comprend des saillies (159) sur les côtés droit et gauche du poids (155) au milieu de la direction longitudinale, les ressorts de sollicitation (157) sont disposés entre les saillies (159) et l'extrémité avant et l'extrémité arrière du corps de réduction de vibration (153), dans lequel le réducteur de vibration dynamique (151) est disposé en utilisant l'espace interne (201) existant entre la surface de paroi intérieure de la région supérieure du carter (107) de manivelle et le mécanisme interne et l'espace interne (201) est dimensionné pour être plus grand dans les directions horizontale et longitudinale que dans la direction verticale et le réducteur de vibration dynamique (151) a une forme se conformant à l'espace interne (201).
